# FASCICULE DE BREVET EUROPEEN

(11) **EP 1 740 420 B1**
(45) Date de publication et mention de la délivrance du brevet: **18.02.2009**
(21) Numéro de dépôt: 05729522.2
(22) Date de dépôt: 12.04.2005
(51) Int. Cl.: B60R 25/00

(54) **DISPOSITIF D"IDENTIFICATION POUR UN VEHICULE AUTOMOBILE EQUIPE D"UN SYSTEME D"ACCES ET / OU DEMARRAGE DIT MAINS LIBRES**
IDENTIFIKATIONSVORRICHTUNG FÜR EIN KRAFTFAHRZEUG MIT EINEM HANDFREIEN ZUGANG UND/ODER MOTORSTARTSYSTEM
IDENTIFICATION DEVICE FOR A MOTOR VEHICLE COMPRISING A HANDS-FREE ACCESS AND/OR ENGINE START SYSTEM

(30) Priorité: 16.04.2004 FR 0403970
(43) Date de publication de la demande: 10.01.2007
(73) Titulaire: VALEO SECURITE HABITACLE S.A.S., 94042 Créteil Cédex (FR)
(72) Inventeur: Tessier, Jean-Michel, Valeo Securite Habitacle IP, F-94042Créteil Ce dex (FR); Alliot, Pascal, Valeo Securite Habitacle IP, F-94042 Créteil Cedex (FR)
(86) Numéro de dépôt international: PCT/EP2005/051609
(87) Numéro de publication internationale: WO 2005/110824

(56) Documents cités:
- EP-A- 0 854 533
- EP-A- 1 055 789
- EP-A- 1 172 269

## Description

La présente invention concerne un système d'accès et ou démarrage dit mains libres qui équipe des véhicules automobiles. Le domaine de l'invention est donc celui des véhicules automobiles, tels que les voitures ou les camions. La présente invention a pour objet de rendre les signaux électromagnétiques émis par le système mains libres détectables à l'intérieur de tout l'habitacle d'un véhicule. L'invention a aussi pour objet de limiter le coût d'un tel système.

Les systèmes mains-libres équipent la plupart des véhicules automobiles. En général, ces systèmes mains-libres comportent un dispositif d'identification embarqué au niveau du véhicule, ainsi qu'un identifiant mobile porté par un usager. Le dispositif d'identification émet des signaux électromagnétiques dits d'interrogation à destination de l'identifiant qui sont détectables par ce dernier dans une zone de couverture donnée.

Ainsi, lorsque l'identifiant se situe à l'intérieur de cette zone de couverture, il émet en retour des signaux électromagnétiques dits de réponse à destination du dispositif d'identification afin de lui indiquer sa présence. Selon la zone de couverture considérée (zone extérieure au véhicule, ou zone intérieure) le véhicule peut alors être soit décondamné/condamné, soit démarré. En revanche, lorsque l'identifiant se situe à l'extérieur de la zone de couverture, il ne reçoit pas les signaux d'interrogation, et n'émet donc pas de signaux de réponse à destination du dispositif d'identification. L'identifiant est alors réputé absent.

Le dispositif d'identification, pour émettre les signaux électromagnétiques à destination de l'identifiant, comporte au moins une antenne. On appellera ainsi dans la suite du document, zone de couverture d'une antenne, la zone de couverture dans laquelle les signaux émis par cette antenne sont détectables. On pourra aussi dire d'une antenne qu'elle couvre une certaine zone lorsque les signaux qu'elle émet sont détectables à l'intérieur de cette zone.

Deux types d'antenne sont principalement connus et utilisés dans le domaine de l'automobile : les antennes de type ferrite et les antennes de type boucle. Les antennes de type ferrite possèdent une structure proche de celle d'une bobine. En effet, une antenne ferrite comporte notamment un fil enroulé autour d'un noyau en fer doux de manière à constituer des spires. Pour une antenne de type ferrite, les signaux émis rayonnent donc autour de l'endroit où se situe l'antenne. L'antenne de type ferrite est donc située à l'intérieur de la zone dans laquelle on souhaite détecter la présence d'un identifiant. Plusieurs antennes de type ferrite peuvent être utilisées afin de couvrir le volume intérieur d'un habitacle d'un véhicule.

En ce qui concerne les antennes de type boucle, elles comportent un ou plusieurs fils conducteurs qui décrivent une ou plusieurs boucles. En général, les antennes de type boucle sont placées à l'intérieur du véhicule, de manière à former des zones à l'intérieur desquelles on souhaite détecter la présence de l'identifiant.

D'autres antennes peuvent être utilisées (par exemple des antennes sur support flexible, ou des antennes sérigraphiées sur PCB ...).

Chaque antenne est utilisée avec un circuit électronique de contrôle d'antenne qui l'alimente et lui délivre des signaux utiles à transmettre. Une antenne est reliée à son circuit de contrôle par l'intermédiaire de moyens de connexion électriques, constitués généralement d'une paire de fils d'une longueur pouvant atteindre plusieurs mètres pour disposer l'antenne à un endroit donné. Pour limiter le rayonnement de champ électromagnétique le long de ces fils, ces derniers sont avantageusement torsadés.

Ces antennes fonctionnent correctement mais ne permettent pas une couverture complète de l'intérieur d'un habitacle.

En effet, les signaux émis par ces antennes ne sont pas toujours détectables à l'intérieur de tout le véhicule. Ainsi, dans les parties extrêmes, telles que les coins du véhicule, les boites de rangement ou certains coins du coffre, les signaux émis par ces antennes peuvent ne pas être détectés par le dispositif identifiant.

En outre, des circuits électroniques situés à l'intérieur du véhicule peuvent engendrer des signaux électromagnétiques qui perturbent les signaux émis par ces antennes. Ces circuits électroniques peuvent donc engendrer des zones où les signaux émis par une antenne ne sont pas détectables par un identifiant. Par exemple, à l'endroit où se situe un tableau de bord qui comporte de nombreux composants électroniques, les signaux électromagnétiques émis par les antennes sont très difficilement (ou ne sont pas) détectables par l'identifiant.

Toutes ces zones de non couverture dues à une géométrie du véhicule ou à des signaux perturbateurs, peuvent poser des problèmes à un usager. En effet, si ce dernier entre dans une voiture et qu'il dépose son identifiant dans une zone de non couverture par une antenne, il ne sera pas autorisé à démarrer le véhicule alors qu'il se trouve à l'intérieur de ce véhicule.

Pour remédier à ces problèmes de non couverture et de signaux perturbateurs, on pourrait envisager une utilisation d'antennes de forte puissance qui pourraient couvrir tout l'intérieur de l'habitacle du véhicule d'une manière sûre. Toutefois, une antenne dont la zone de couverture serait supérieure dépasserait largement les contours de l'habitacle du véhicule, ce qui pourrait engendrer d'autres problèmes. Notamment, un utilisateur portant un identifiant et situé à l'extérieur du véhicule pourrait être autorisé à démarrer le véhicule alors qu'il ne se trouverait pas à l'intérieur de l'habitacle.

On pourrait également placer des antennes supplémentaires aux endroits où les signaux électromagnétiques ne sont pas détectables par l'identifiant. Toutefois, ces antennes supplémentaires nécessiteraient des circuits électroniques supplémentaires avec notamment des ajouts de circuits de contrôle d'antenne afin de commander les différentes antennes. Ces antennes supplémentaires reviendraient donc cher et leur circuit de contrôle engendrerait un encombrement supplémentaire du dispositif d'identification.

L'invention se propose de résoudre ces problèmes de non couverture de l'intérieur de l'habitacle du véhicule en n'augmentant pas le coût du dispositif d'identification d'origine et en n'introduisant par ailleurs aucun circuit électronique supplémentaire.

A cet effet, dans l'invention, on réalise, avec les fils électriques faisant partie des moyens de connexion électriques reliant un circuit de contrôle à une antenne principale, une ou plusieurs boucles qui engendrent un champ magnétique local. On crée ainsi localement des antennes secondaires qui sont connectées en série avec l'antenne principale.

Conformément à l'invention, les boucles peuvent être obtenues avec un fil électrique, ou encore deux fils électriques qui peuvent être écartés à plusieurs endroits différents. En écartant les fils électriques aux endroits correspondant aux zones de non couverture précitées, il est ainsi possible de rendre détectables ces signaux à tous les endroits de l'intérieur de l'habitacle du véhicule.

L'écartement des fils modifie très légèrement l'impédance totale de l'antenne et des fils électriques qui lui sont reliés. Ainsi, il n'est pas nécessaire de modifier le circuit de contrôle de l'antenne. En outre, le coût de l'invention est quasiment nul car elle est réalisée à partir de fils électriques très peu onéreux, voire déjà présents dans le dispositif d'identification d'origine. En effet, dans l'invention, seule la disposition des fils reliant l'antenne principale à son circuit de contrôle est modifiée.

La présente invention concerne donc un dispositif d'identification pour véhicule automobile équipé d'un système d'accès et/ou démarrage dit mains-libres, le dispositif comportant une antenne principale, un circuit électronique de contrôle d'antenne et des moyens de connexion électrique reliant ce circuit électronique à cette antenne principale, caractérisé en ce que les moyens de connexion électrique comportent au moins un fil électrique agencé de manière à former sur au moins une partie une boucle qui engendre un champ magnétique local, formant ainsi une antenne secondaire.

La présente invention sera mieux comprise à la lecture de la description qui suit et à la vue des figures qui l'accompagnent. Ces figures sont données à titre illustratif mais nullement limitatif de l'invention. Ces figures montrent :

- Figures 1a à 1c : trois représentations schématiques de mises en oeuvre de l'invention ;

- Figures 2a et 2b : deux représentations schématiques de mises en oeuvre possibles de l'invention utilisant un support pour les antennes secondaires ;

- Figure 3a : une représentation schématique d'un système d'accès et/ou de démarrage selon l'art antérieur équipant un véhicule ;

- Figure 3b : une représentation schématique d'un système d'accès et/ou de démarrage selon l'invention ;

- Figures 4a et 4b : une représentation schématique d'une réalisation de l'invention dans laquelle deux antennes émettent de manière alternative.

Les éléments communs aux figures conservent la même référence d'une figure à l'autre.

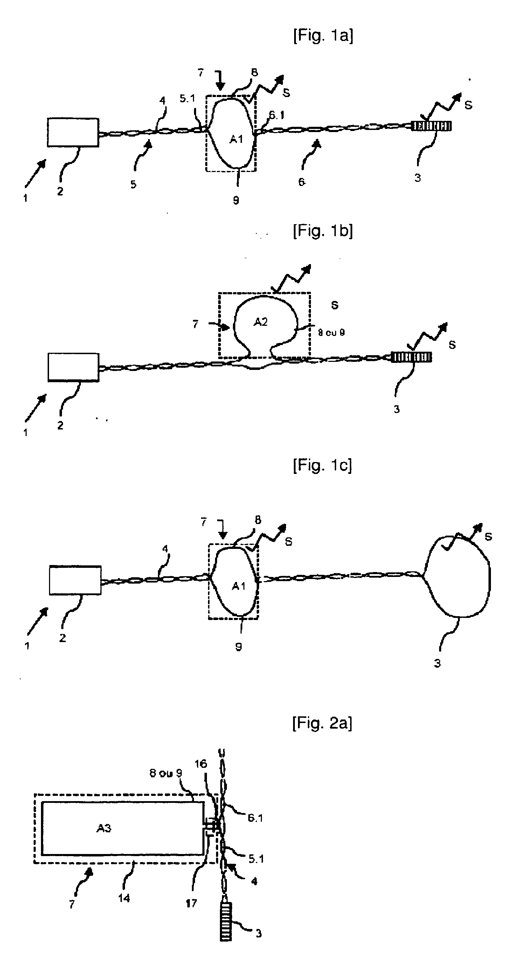

La figure 1 a montre un dispositif 1 d'identification qui comporte un circuit 2 de contrôle d'antenne, une antenne principale 3, ici de type ferrite, et des moyens de connexion électrique pour relier électriquement le circuit 2 de contrôle à l'antenne principale 3. Dans cet exemple de réalisation, les moyens de connexion électrique sont constitués d'une paire 4 de fils électriques qui relient le circuit de contrôle 2 à l'antenne principale 3. La paire 4 de fils électriques permet d'acheminer les signaux électriques d'alimentation et des signaux utiles, à transmettre, vers l'antenne principale 3. L'antenne principale 3 émet des signaux S électromagnétiques correspondant aux signaux utiles. Ces signaux S sont détectables par un dispositif identifiant (non représenté) dans une zone de couverture.

La paire 4 de fils électriques peut posséder une longueur de plusieurs mètres afin que le circuit 2 de contrôle puisse se situer à l'endroit du véhicule où le dispositif d'identification est présent et que l'antenne 3 puisse se situer à l'intérieur d'une zone à couvrir.

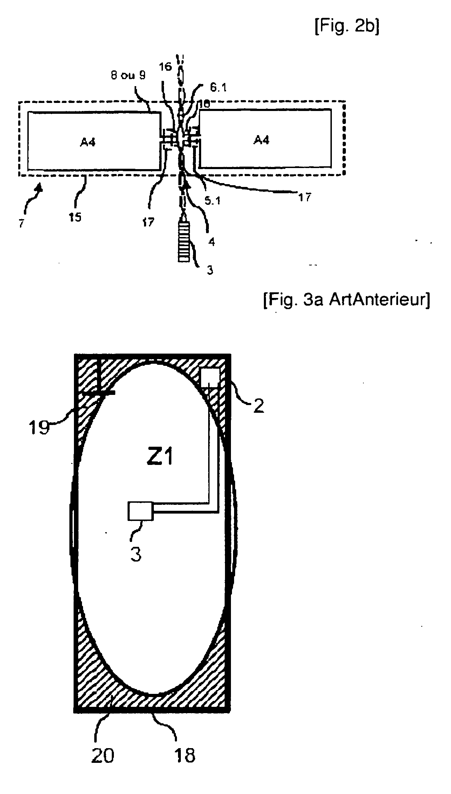

Classiquement, les deux fils électriques sont normalement réunis sur toute leur longueur pour d'une part, faciliter l'intégration dans le véhicule, et d'autre part, limiter le rayonnement de champ magnétique. Les deux fils sont par exemple jointifs. Afin de limiter encore plus le rayonnement électromagnétique, et comme représenté à titre d'exemple non limitatif sur les figures 1 et 2, les deux fils électriques de cette paire 4 sont avantageusement torsadés l'un autour de l'autre sur des parties 5 et 6.

En revanche, conformément à l'invention, il existe au moins une partie 7 dans laquelle les fils électriques de la paire 4 ne sont pas réunis, mais au contraire écartés l'un de l'autre. Dans l'exemple représenté sur la figure 1a, cette partie 7 a été obtenue en détorsadant les fils électriques 8 et 9 de la paire 4. En effet, dans la partie 7 détorsadée, les fils 8 et 9 sont écartés d'une distance plus grande que celle qui les sépare dans les parties 5 et 6 torsadées. Deux torsades 5.1 et 6.1 encadrent la partie 7 détorsadée et une surface A1 est circonscrite par les deux fils 8 et 9 dans la partie 7. Sur l'exemple non limitatif de la figure 1a, la partie 7 détorsadée est réalisée de manière à ce que les deux fils 8 et 9 de la paire 4 décrivent globalement une forme de O. Bien entendu, d'autres formes peuvent être envisagées en fonction de la zone de couverture que l'on souhaite obtenir.

La partie 7 détorsadée joue ainsi le rôle d'une antenne secondaire de type boucle qui émet des signaux électromagnétiques détectables par l'identifiant autour de cette partie 7. Plus la surface A1 de cette antenne secondaire est grande, plus les signaux électromagnétiques émis par cette antenne secondaire sont détectables par un identifiant dans une grande zone autour de la partie détorsadée. Plus cette surface A1 est petite, plus les signaux émis par cette antenne secondaire sont détectables dans une petite zone autour de la partie détorsadée.

A chaque partie 7 détorsadée de forme particulière correspond une puissance d'émission et une impédance. La partie 7 détorsadée des fils 8 et 9 ne doit donc pas délimiter une surface A trop grande afin que l'impédance formée par la paire 4 de fils et l'antenne principale 3 ne soit pas trop modifiée. Dans un exemple, la partie 7 détorsadée ne doit pas modifier de plus de 15% l'impédance totale de l'antenne et de la paire 4 de fils. Cette modification limitée de l'impédance totale permet au circuit 2 de contrôle de débiter le même courant que celui débité lorsque la paire 4 de fils électriques est complètement torsadée.

La figure 1b montre une variante de réalisation de la figure la dans laquelle la partie détorsadée 7 n'est plus formée à partir des deux fils 8 et 9 mais à partir d'un seul des deux fils de la paire de fils électriques 4. Plus précisément, dans cette réalisation, un seul des deux fils de la paire 4 est détorsadé de manière à ce que la partie 7 délimite une surface. Ainsi, la surface A2 peut être formée soit par le fil 8 soit par le fil 9 de la paire électrique 4. Dans cette réalisation, les deux fils 8 ou 9 de la partie 7 détorsadée sont toujours écartés l'un de l'autre plus qu'ils ne le sont dans les parties 5 et 6 torsadées.

La figure le montre une variante des figures 1a et 1b dans laquelle l'antenne principale 3 est une antenne de type boucle. En effet, l'invention peut être réalisée en utilisant des moyens de connexion reliant n'importe quel type d'antenne à un circuit 2 de contrôle d'antenne. Dans cette variante, la même paire de fils est utilisée pour réaliser l'antenne principale 3, l'antenne secondaire 7, et la connexion électrique entre le circuit 2 de contrôle et les antennes 3 et 7.

Avec l'invention, on réalise donc localement une antenne secondaire de type boucle en série avec l'antenne principale 3. Cette antenne secondaire est réalisée avec un coût nul puisqu'elle est réalisée à partir de fils déjà présents dans le système d'origine qui sont agencés de manière particulière. Par ailleurs, l'invention ne nécessite aucun ajout de circuits électroniques supplémentaires. En effet, le circuit 2 de commande de l'antenne principale 3 permet le contrôle et l'alimentation non seulement de l'antenne principale mais aussi de l'antenne secondaire 7. On remarquera d'ailleurs que les signaux émis par l'antenne principale et l'antenne secondaire formée par partie 7 sont les mêmes.

Dans les réalisations des figures 1a à 1c, une seule partie 7 formant antenne secondaire a été réalisée. Toutefois, il est possible de détorsader la paire de fils électriques en plusieurs endroits, de manière à ce que des signaux S électriques soient détectables par le dispositif identifiant dans des zones situées autour de tous ces endroits.

Des parties formant antennes secondaires sont ici directement réalisées à partir de la paire 4 de fils électriques reliant le circuit 2 de contrôle à l'antenne principale 3, par exemple en détorsadant localement un ou les deux fils électriques 8 et 9 de manière à écarter ces mêmes fils l'un de l'autre. En variante, ces parties formant antennes secondaires peuvent comporter un fil électrique, ou deux fils écartés, qui sont rapportés et reliés de part et d'autre, soit par soudage, soit par l'intermédiaire de connecteurs, à deux fils ou deux paires de fils électriques reliés respectivement au circuit de contrôle et à l'antenne principale. On peut notamment envisager, au montage d'un tel dispositif sur le véhicule, d'utiliser une paire de fils torsadés reliant le circuit de contrôle 2 à l'antenne principale 3, couper un ou deux fils aux endroits où l'on souhaite placer des antennes secondaires, et connecter ces antennes secondaires aux endroits où les fils ont été coupés.

Les figures 2 montrent des exemples de réalisation de parties 7 formant antennes secondaires qui sont montées sur des supports 14 ou 15.

Ainsi, sur la figure 2a, un des fils de la paire 4 de fils électriques est accroché à un support 14 de forme rectangulaire, de manière à délimiter une surface A3 bien définie entre deux extrémités des deux torsades 5.1 et 6.1. Cette surface bien définie permet de calibrer l'intensité du champ magnétique engendré par la partie détorsadée formant antenne secondaire. En effet, grâce au support 14, on peut ainsi créer industriellement des parties 7 détorsadées de manière à ce que la surface formée délimitée par ces parties 7 soit toujours la même d'un véhicule à l'autre et donc que l'intensité des signaux émis par ces antennes secondaires soient aussi la même d'un véhicule à l'autre. En d'autres termes, le support 14 permet de calibrer précisément l'intensité de l'antenne secondaire formée par une partie 7 détorsadée.

Sur la figure 2a, la partie 7 détorsadée montée sur le support 14 comporte une forme en U et est connectée en série avec l'un des deux fils 8 ou 9 de la paire 4 de fils conducteurs. Dans une réalisation particulière, le support 14 est réalisé à partir d'un câble de type flex dont on a soudé les extrémités de deux fils situés aux extrémités de ce câble. En variante, ce support 14 est un support plastique comportant une rainure à l'intérieur de laquelle on introduit le fil de la partie 7. Les formes de la partie 7 détorsadée et du support peuvent être quelconques et s'adapter à la forme de la zone à couvrir.

En outre, la partie 7 détorsadée peut être reliée à la paire 4 de fils à la faveur d'un assemblage de connecteurs 16 et 17. En effet, un des fils de la paire 4 peut être coupé et relié à un connecteur 16 et les deux extrémités du fil de la partie détorsadée peuvent être reliées à un connecteur 17. Ainsi, dans une réalisation industrielle, les parties 7 détorsadées peuvent être placées au préalable dans des zones où les signaux électromagnétiques ne sont pas détectés par un identifiant et reliées à la paire 4 de fils électriques au dernier moment.

Bien entendu, il est possible d'utiliser des connecteurs afin de réaliser la partie 7 détorsadée rapportée sans forcément utiliser un support 14.

La figure 2b montre une variante de la réalisation de la figure 2a. Dans cette variante, les deux fils de la paire 4 sont détorsadés et montés sur un support 15 de manière à délimiter une surface A4 qui s'étend de part et d'autre de cette paire 4, entre des extrémités des deux torsades 5.1 et 6.1. Cette configuration revient à réaliser deux parties 7 détorsadées décrites dans la figure 2a.

Afin de réaliser la connexion entre la partie 7 détorsadée et les parties 5 et 6 torsadées, il est donc possible d'utiliser deux connecteurs 16 et deux connecteurs 17. Les deux connecteurs 16 relient les extrémités des parties torsadées et les deux connecteurs 17 relient les extrémités de la partie 7 détorsadée. En variante, on utilise uniquement deux connecteurs pour réaliser ce montage. Un premier connecteur relie quatre extrémités des parties 5 et 6 torsadées et un deuxième connecteur relie quatre extrémités de la partie 7 détorsadée.

Comme précité, le support 15 peut être un câble de type flex ou une plaque en plastique comportant une rainure.

Le choix du mode de réalisation dépend de la forme et de l'emplacement des zones que les parties détorsadées doivent couvrir. Si ces zones à couvrir se déploient de part et d'autre de la paire 4 de fils, on utilisera de préférence le support 15. En revanche, si elles se déploient seulement d'un côté de cette paire de fils 4, on utilisera plutôt le support 14.

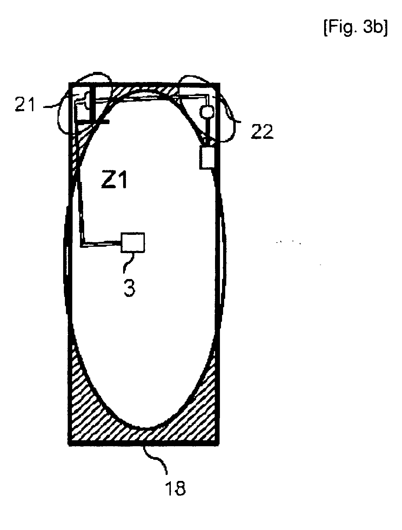

Les figures 3 montrent la réalisation de l'invention à l'intérieur d'un habitacle 18 d'un véhicule. Les zones de couverture d'antenne sont représentées en deux dimensions mais c'est en fait un volume que ces zones de couverture décrivent en réalité.

La figure 3a montre un exemple de l'état de la technique dans lequel une antenne 3 principale par exemple de type ferrite assure la couverture d'une zone Z1 principale. Cette antenne principale 3 est reliée au circuit de contrôle 2 par des moyens de connexion électrique classiques, à savoir une paire de fils électriques, de préférence torsadés sur toute leur longueur. La zone Z1 couvre la plus grande partie du volume intérieur de l'habitacle 18 et s'étend légèrement à l'extérieur de cet habitacle 18. Toutefois, des zones 19 et 20 hachurées ne sont pas couvertes par l'antenne principale 3. Ces zones 19 et 20 correspondent ici à des parties extrêmes de l'habitacle 18, par exemple à des extrémités d'une planche de bord et à des extrémités d'une tablette arrière.

La figure 3b montre un exemple d'utilisation de l'invention dans laquelle la paire de fils qui relie l'antenne 3 principale au circuit 2 de contrôle a été détorsadée à deux endroits, de manière à créer deux boucles formant deux antennes secondaires qui sont connectées électriquement en série avec l'antenne 3 principale et dont les zones de couvertures sont référencées 21-22. D'autres endroits pourraient être prévus pour couvrir les zones arrières.

Les zones 21-22 couvertes par ces antennes secondaires sont beaucoup plus petites que la zone Z1 couverte par l'antenne 3 principale de type ferrite ou de type boucle. Dans un exemple, les zones de couverture des antennes secondaires correspondent chacune à 10% de la zone de couverture de l'antenne principale.

Détorsader la paire de fils permet ainsi de réaliser plusieurs antennes à partir d'une seule antenne principale. Il est ainsi possible de réaliser plusieurs zones 21-22 de couverture secondaires distinctes de la zone Z1 de couverture de l'antenne principale afin de couvrir le volume global de l'habitacle 18 du véhicule.

En variante, on détorsade la paire de fils localement autour d'un tableau de bord ou à l'intérieur d'un coffre séparé de l'habitacle par une paroi métallique qui absorbe les signaux électromagnétiques de basses fréquences, environ 125kHz, émis par l'antenne principale 3. En outre, les paires de fils peuvent être détorsadés dans toutes les zones extrêmes ou périphériques de l'habitacle 18, telles qu'une boite à gant, un pare-soleil, un range lunette, une capucine ou des rangements de portières ou de coffre.

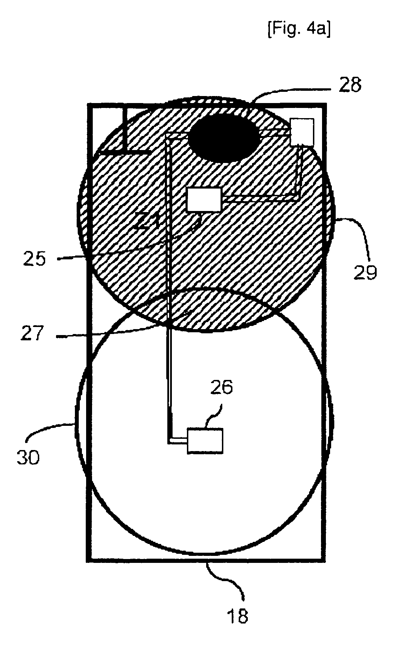

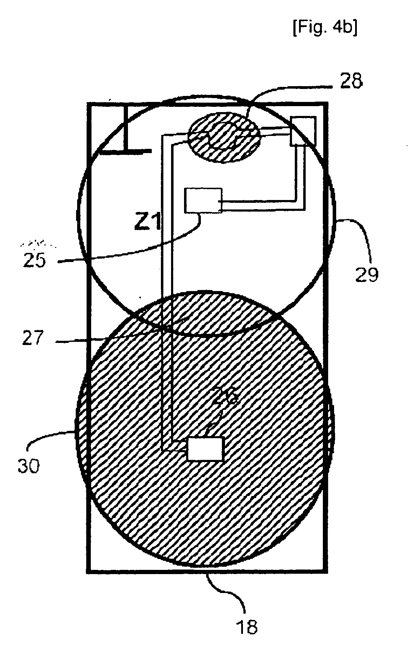

Les figures 4 montrent un exemple de couverture de l'habitacle 18 d'un véhicule à l'aide de deux antennes principales 25 et 26, par exemple de type ferrite.

Sur la figure 4a, une zone 29 de couverture de l'antenne 25 principale est hachurée tandis que sur la figure 4b, une zone 30 de couverture de l'antenne 26 est hachurée. L'antenne 25 assure la couverture d'une partie avant de l'habitacle 18 tandis que l'antenne 26 assure la couverture d'une partie arrière de l'habitacle 18. Prises dans leur ensemble, ces deux zones 29 et 30 de couverture de ces antennes 25 et 26 assurent donc globalement la couverture totale du volume intérieur de l'habitacle 18, avec un recouvrement dans la zone 27 du véhicule.

Dans une réalisation particulière, pour éviter la zone 27 de recouvrement qui pourrait nuire à la réception des signaux par un identifiant, les antennes 25 et 26 émettent de manière alternée.

Par ailleurs, sur la figure 4a, une zone 28 n'est pas couverte par l'antenne 25. Cette zone de non couverture peut par exemple correspondre à une zone où se trouve un lecteur de DVD ou un lecteur autoradio comportant des circuits électroniques qui émettent des signaux perturbateurs.

Pour éviter là encore un recouvrement, on utilise de préférence la paire de fils reliée à l'antenne 26 qui ne couvre pas la zone 28 afin de créer une antenne secondaire selon l'invention. Plus précisément, on utilise ici la paire de fils électriques reliant l'antenne 26 à son circuit de contrôle afin qu'il ne se produise pas de recouvrement entre la zone 28 couverte par la partie détorsadée et la zone couverte par l'antenne principale 26. Plus généralement, selon l'invention, on réalise des parties détorsadées à des endroits, de manière à ce que la zone de couverture de la partie détorsadée ne se recouvre pas avec la zone de couverture de l'antenne principale.

En conséquence, lorsque sur la figure 4a seule l'antenne 25 est alimentée, toute la partie avant de l'habitacle exceptée la zone 28 est couverte. Puis après une alternance dans l'alimentation des antennes, seule l'antenne 26 couvre la partie arrière de l'habitacle 18 ainsi que la partie 28 auparavant non couverte. Les alternances dans les alimentations d'antenne sont réalisées de manière à toujours détecter la présence d'un identifiant lorsque ce dernier se situe à l'intérieur de l'habitacle 18.

## Revendications

1. Dispositif (1) d'identification pour véhicule automobile équipé d'un système d'accès et/ou démarrage dit mains-libres, le dispositif comportant une antenne (3) principale, un circuit (2) électronique de contrôle d'antenne et des moyens (4, 8, 9) de connexion électrique reliant ce circuit électronique (2) à cette antenne (3) principale, **caractérisé en ce que** les moyens (4, 8, 9) de connexion électrique comportent au moins un fil électrique (8, 9) agencé de manière à former sur au moins une partie (7) une boucle qui engendre un champ magnétique local, formant ainsi une antenne secondaire.

2. Dispositif selon la revendication 1, **caractérisé en ce que** les moyens de connexion électrique comportent deux fils électriques (8, 9) qui sont écartés l'un par rapport à l'autre au niveau de ladite partie (7).

3. Dispositif selon la revendication 2, **caractérisé en ce que** les moyens (4, 8, 9) de connexion électrique sont constitués uniquement des deux fils électriques (8, 9), ces deux fils électriques étant réunis en dehors de ladite partie de manière à former une paire (4) de fils à faible rayonnement électromagnétiques.

4. Dispositif selon la revendication 3 **caractérisé en ce que** les deux fils électriques (8, 9) sont torsadés l'un autour de l'autre en dehors de ladite partie (7).

5. Dispositif selon l'une quelconque des revendications 2 à 4, **caractérisé en ce que** les deux fils électriques sont également utilisés pour constituer l'antenne principale (3).

6. Dispositif selon la revendication 1, **caractérisé en ce que** ladite partie (7) est rapportée par soudage ou par l'intermédiaire de connecteurs (16, 17) reliant ledit fil électrique de part et d'autre à deux fils électriques reliées respectivement au circuit de contrôle (2) et à l'antenne principale (3).

7. Dispositif selon l'une des revendications 1 à 6 **caractérisé en ce que** ledit fil électrique au niveau de ladite partie (7) est monté sur un support (14, 15).

8. Dispositif selon l'une des revendications précédentes, **caractérisé en ce que**
- l'antenne principale émet des signaux (S) électromagnétiques détectables par un identifiant dans une première zone (Z1) de couverture,
- ladite partie formant antenne secondaire émet des signaux électromagnétiques détectables par l'identifiant dans une deuxième zone (21-22) de couverture plus petite que la première zone de couverture

9. Dispositif selon la revendication 8 **caractérisé en ce que**- la deuxième zone de couverture correspond globalement à 10% de la première zone de couverture.

10. Dispositif d'identification selon l'une des revendications 8 ou 9 **caractérisé en ce que** ladite une partie formant antenne secondaire est réalisée à un endroit de manière à ce que la deuxième zone de couverture et la première zone de couverture ne se recouvrent pas.

## Claims

1. Identification device (1) for an automobile vehicle equipped with a so-called hands-free access and/or starting system, the device comprising a main antenna (3), an electronic antenna control circuit (2) and electrical connection means (4, 8, 9) connecting this electronic circuit (2) to this main antenna (3), **characterised in that** the electrical connection means (4, 8, 9) comprise at least one electrical wire (8, 9) arranged so as to form on at least one part (7), a loop that generates a local magnetic field thus forming a secondary antenna.

2. Device according to claim 1, **characterised in that** the electrical connection means comprise two electrical wires (8, 9) that are separated from each other at said part (7).

3. Device according to claim 2, **characterised in that** the electrical connection means (4, 8, 9) are composed of only two electrical wires (8, 9), these two electrical wires being connected outside said part so as to form a pair (4) of wires with low electromagnetic radiation.

4. Device according to claim 3, **characterised in that** the two electrical wires (8, 9) are twisted around each other outside said part (7).

5. Device according to any one of claims 2 to 4, **characterised in that** the two electrical wires are also used to form the main antenna (3).

6. Device according to claim 1, **characterised in that** said part (7) is made by welding or by means of connectors (16, 17) connecting said electrical wire at each side to two electrical wires, one of which is connected to the control circuit (2) and the other to the main antenna (3).

7. Device according to one of claims 1 to 6, **characterised in that** said electrical wire at said part (7) is mounted on a support (14, 15).

8. Device according to one of the previous claims, **characterised in that**
- the main antenna emits electromagnetic signals (S) that can be detected by an identifier in a first coverage zone (Z1),
- said part forming a secondary antenna emits electromagnetic signals that can be detected by the identifier in a second coverage zone (21-22) smaller than the first coverage zone.

9. Device according to claim 8, **characterised in that** the second coverage zone globally corresponds to 10% of the first coverage zone.

10. Identification device according to one of the claims 8 or 9, **characterised in that** said part forming the secondary antenna is made at a location such that the second coverage zone and the first coverage zone do not overlap.

## Patentansprüche

1. Identifizierungsvorrichtung (1) für ein Kraftfahrzeug mit einer Freisprech-Zugangs- und/oder Anlasseinrichtung, wobei die Vorrichtung eine Hauptantenne (3), eine elektronische Schaltung (2) zur Antennenüberwachung und elektrische Anschlussmittel (4, 8, 9) zur Verbindung der elektronischen Schaltung (2) mit der Hauptantenne (3) umfasst, **dadurch gekennzeichnet, dass** die elektrischen Anschlussmittel (4, 8, 9) mindestens eine elektrische Leitung (8, 9) umfassen, die so angeordnet ist, dass sie auf mindestens einem Abschnitt (7) eine Schleife bildet, die ein lokales Magnetfeld erzeugt und somit eine Hilfsantenne bildet.

2. Vorrichtung nach Anspruch 1, **dadurch gekennzeichnet, dass** die elektrischen Anschlussmittel zwei elektrische Leitungen (8, 9) umfassen, die bei dem Abschnitt (7) voneinander beabstandet sind.

3. Vorrichtung nach Anspruch 2, **dadurch gekennzeichnet, dass** die elektrischen Anschlussmittel (4, 8, 9) lediglich von den beiden elektrischen Leitungen (8, 9) gebildet sind, wobei die beiden elektrischen Leitungen außerhalb des Abschnitts zu einem Leitungspaar (4) mit schwacher elektromagnetischer Abstrahlung zusammengefasst sind.

4. Vorrichtung nach Anspruch 3, **dadurch gekennzeichnet, dass** die beiden elektrischen Leitungen (8, 9) außerhalb des Abschnittes (7) miteinander verdrillt sind.

5. Vorrichtung nach einem der Ansprüche 2 bis 4, **dadurch gekennzeichnet, dass** die beiden elektrischen Leitungen zudem zur Bildung der Hauptantenne (3) benutzt werden.

6. Vorrichtung nach Anspruch 1, **dadurch gekennzeichnet, dass** der Abschnitt (7) mittels einer Schweißverbindung oder über Steckverbinder (16, 17) zur beidseitigen Verbindung der elektrischen Leitung mit zwei elektrischen Leitungen verbunden ist, die jeweils mit der Überwachungsschaltung (2) und der Hauptantenne (3) verbunden sind.

7. Vorrichtung nach einem der Ansprüche 1 bis 6, **dadurch gekennzeichnet, dass** die elektrische Leitung bei dem Abschnitt (7) auf einem Träger (14, 15) gehaltert ist.

8. Vorrichtung nach einem der vorhergehenden Ansprüche, **dadurch gekennzeichnet, dass**
- die Hauptantenne elektromagnetische Signale (S) aussendet, die innerhalb einer ersten Abdeckungszone (Z1) von einer tragbaren Identifikationseinheit erfasst werden können,
- der die Zweitantenne bildende Abschnitt elektromagnetische Signale aussendet, die von der Identifikationseinheit einer zweiten Abdeckungszone (21-22) erfasst werden können, die kleiner ist als die erste Abdeckungszone.

9. Vorrichtung nach Anspruch 8, **dadurch gekennzeichnet, dass** die zweite Abdeckungszone insgesamt 10 % der ersten Abdeckungszone entspricht.

10. Identifizierungsvorrichtung nach dem einem Ansprüche 8 oder 9, **dadurch gekennzeichnet, dass** der eine Hilfsantenne bildende Abschnitt an einer Stelle so ausgeführt ist, dass die zweite Abdeckungszone und die erste Abdeckungszone sich nicht überlappen.
